# EUROPÄISCHE PATENTSCHRIFT

(11) **EP 0 347 628 B1**
(45) Veröffentlichungstag und Bekanntmachung des Hinweises auf die Patenterteilung: **09.03.1994**
(21) Anmeldenummer: 89109977.2
(22) Anmeldetag: 02.06.1989
(51) Int. Cl.: B01D 46/52

(54) **Faltbares Filtermedium für Schwebstoffilter, Verfahren zu seiner Herstellung sowie damit versehene Filteranordnung**
Filter medium for airborne particles, manufacturing process thereof and filtering arrangement provided therewith
Matière filtrante plissée pour des filtres pour matières suspendues dans l'air, son procédé de fabrication et agencement de filtration les contenant

(30) Priorität: 23.06.1988 DE 3821273
(43) Veröffentlichungstag der Anmeldung: 27.12.1989
(73) Patentinhaber: REFIL Gmbh Filtertechnik + Recycling, D-63674 Altenstadt (DE)
(72) Erfinder: Reuschenbach, Hermann, Dr.-Ing., D-8000 München 40 (DE)
(74) Vertreter: Müller-Wolff, Thomas, Dipl.-Ing.

(56) Entgegenhaltungen:
- DE-A- 1 921 573
- GB-A- 566 604
- PATENT ABSTRACTS OF JAPAN, Band 1, Nr. 96, 30. August 1977, Seite 2591 M 77;& JP-A-52 37 273 (HITACHI SEISAKUSHO K.K.) 23-03-1977

## Beschreibung

Die Erfindung betrifft ein faltbares Schwebstoffiltermedium mit zwischen den Faltungslagen angeordneten Abstandshaltern, sowie ein Verfahren zu seiner Herstellung und eine damit versehene Filteranordnung.

Schwebstoffilter dienen vorwiegend zum Ausfiltern von teilchenförmiger Materie, wie Staub, aus Luft oder Gasen, wobei das Filtermedium, welches im allgemeinen aus einem fasrigen Material besteht, zur Vergrösserung der wirksamen Filterfläche mehrfach gefaltet ist. Abstandshalter sind zwischen den Faltungslagen angeordnet, um diese in einem geeigneten Abstand voneinander zu halten. Die Abstandshalter selbst sind im allgemeinen zickzackförmig gefaltet und werden in die durch die Faltungen des Filtermediums gebildeten Taschen abwechselnd von der einen und der anderen Seite eingeschoben. Sie treten dabei mit jeweils einer ihrer stirnseitigen Kanten in Eingriff mit dem Filtermedium insbesondere längs der Bereiche, an denen die Faltungen bzw. Umbiegungen vorgesehen sind. Da die Abstandshalter im allgemeinen aus einem steiferen Material als das Filtermedium, z.B. aus sehr dünnem Aluminiumblech, bestehen, sind die stirnseitigen Kanten entsprechend scharf, was bedeutet, dass das Filtermedium im Bereich der Faltungen durch die Stirnkanten der Abstandshalter beschädigt werden kann. Beschädigungen können bei der Montage der Abstandshalter als auch während des Betriebes der Filter auftreten. Die Standzeit der Filter ist daher häufig durch Verschleiss längs der mit den Stirnkanten der Abstandshalter in Berührung stehenden Bereiche des Filtermediums geprägt.

Zur Vermeidung eines vorzeitigen Verschleisses wurde schon vorgeschlagen (DE-A-16 07 697), die Stirnkanten der Abstandshalter durch Umbördeln zu entschärfen. Da die Abstandshalter jedoch aus Blechen von z.B. wenigen 1/100 mm Wandstärke gebildet werden, verbleiben selbst nach dem Umbördeln noch relativ scharfe Kanten, so dass mit dieser Massnahme eine nur geringe Verbesserung gegenüber Abstandshaltern ohne umgebördelten Kanten erzielt werden kann. Insbesondere verbleiben die besagten Probleme, wenn, wie grundsätzlich erwünscht, die Faltungen eine runde Konfiguration haben, so dass zwischen Filtermedium und Endkanten der Abstandshalter eine Punktberührung vorliegt.

Es wurde ferner zur Erzielung einer linienförmigen Berührung zwischen Filtermedium und Abstandshalter ein eckiger Verlauf der Faltungen vorgesehen. Die dadurch erzielte geringe Verbesserung im Verschleiss des Filtermediums wird durch ein wesentlich verschlechtertes aerodynamisches Verhalten (starke Wirbelbildung und dgl.) des Filters erkauft.

Bekannt ist es ferner (DE-A-15 07 756 und EPA 0 248 174), auf die Stirnkanten der Abstandshalter U- oder halbkreisförmige Schutzkappen aufzusetzen, oder zwischen Filtermedium und Abstandshalter röhrchenförmige Elemente anzuordnen. Zwar wird hierdurch ein Verschleiss des Filtermediums wirksam vermieden, doch bedeutet die Bereitstellung und Anordnung der Schutzelemente nicht zur zusätzliche Fertigungskosten, sondern auch einen erheblichen Montagemehraufwand. Insbesondere wird eine automatische Montage von Filtermedium und Abstandshalter wesentlich erschwert, da wegen der zickzackförmigen Konfiguration der Abstandshalter das Aufsetzen von Schutzkappen oder dgl. in der Praxis von Hand oder zumindest unter ständiger Überwachung durch eine Bedienungsperson vorgenommen werden muß. Es weiterer Nachteil dieses Verschleißschutzes ist die dadurch bedingte nicht unwesentliche Erhöhung des Gewichtes der Filter.

Aus der DE-A- 1 921 573 ist eine Filterschicht mit verstärktem Faltrücken, sowie ein Gewebe und ein Verfahren zur Herstellung der Filterschicht bekannt. Es handelt sich dabei um Filtermedien, die in U-Form über Filterplatten oder Filterrahmen von Filterpressen gelegt werden, wobei das Filtermedium aus einzelnen Fasern, z.B. Asbestfasern, besteht. Um das Ablösen von Fasern während des Filtrationsvorganges zu verhindern, kann entweder die gesamte filtrierende Oberfläche einer Filterschicht oder auch diejenige Stelle verfestigt werden, die beim Transport und beim Einsetzen der Schicht in die Filterpresse sowie bei den der Filtration vorangehenden Arbeiten mechanisch besonders gefährdet sind. Zur Herstellung einer definierten Falzkante sind in dem Filtermedium Rillen 14 oder 15 eingebracht, um das Umbiegen an der Stirnseite der Filterplatte 16 zu erleichtern. Da mit diesen Rillen 14, 15 gleichzeitig Schwächungszonen in das Filtermedium eingebracht werden, ist vorgesehen, verstärkende Mittel 18 vorzugsweise Gewebestreifen in Höhe der Faltrillen anzubringen. Die Gewebeeinlage sollte längs oder quer am Faltrücken bis oder nahe an den wirksamen Bereich der Filterflächen 11, 12 sich erstrecken.

Aus dem Patent Abstract of Japan, Band 1, Nr. 96, Seite 2591 M 77 JP-A 5237273 vom 23.03.1977 ist eine Filtereinrichtung aus einem doppellagigen Sieb bekannt. Die eine Lage wird aus einem grobmaschigen Sieb 81 und die andere Lage aus einem feinmaschigen Sieb 80, die in Wellenform in einen kastenförmigen Rahmen eingelegt sind, hergestellt. In die Täler der wellenförmigen Sieblagen sind Verstärkungsteile 82 eingelegt. Die Wellenberge, die von der staubhaltigen Luft angeströmt werden, bleiben ungeschützt, da sie ohne Verstärkungsmittel sind.

Aufgabe der vorliegenden Erfindung ist es, ein Schwebstoffiltermedium der eingangs genannten Art sowie ein Verfahren zu seiner Herstellung und eine damit versehene Filteranordnung mit verbesserten aerodynamischen Eigenschaften zu schaffen, so daß der Einsatz von Abstandshaltern ohne Kantenschutz ohne Beeinträchtigung der Lebensdauer bei gleichzeitig wirtschaftlicher Fertigung ermöglicht wird.

Diese wird erfindungsgemäß durch die in den unabhängigen Ansprüchen angegebenen Merkmale gelöst. Weitere Ausgestaltungen der Erfindung sind den Unteransprüchen zu entnehmen.

Nach dem Vorschlag der Erfindung ist das Filtermedium an den Bereichen, wo es mit den Endkanten der Abstandshalter in Berührung treten kann, wenn diese nach Faltung in die Taschen des Filtermediums eingeschoben sind, durch ein geeignetes Material verstärkt, das an diesen Stellen selbst bei Punktberührung eine ausreichende Verschleißfestigkeit gewährleistet Als Verstärkungsmaterial wird vorzugsweise ein dauerelastisches Kunststoffmaterial, wie ein Elastomer aus Si- oder Pu-Basis verwendet. Das erfindungsgemäße Filtermedium läßt sich in besonders wirtschaftlicher Weise herstellen, da sich das Aufbringen des Verstärkungsmaterials ohne weiteres automatisieren läßt. Ebenso unproblematisch gestaltet sich die Montage des Filtermediums und der Abstandshalter zu einer Filteranordnung, da weder zusätzliche Teile auf die Abstandshalter aufgesetzt werden müssen noch Maßnahmen, die die Endkanten der Abstandshalter vom Filtermedium fernhalten, notwendig sind. Die elastische Eigenschaft des Verstärkungsmaterials in Verbindung mit einer querschnittsschächungs- bzw. faltrillenfreien Ausbildung des Filtermediums hat verbesserte aerodynamische Eigenschaften der Filter zur Folge, da die Verstärkung stets eine saubere Ausrundung des Filtermediums an den Faltungen oder Umbiegungsstellen gewährleistet und dadurch Wirbelbildung verurssachende Kanten oder Ecken vermieden werden. Das verbesserte aerodynamische Verhalten hat einen geringeren Druckabfall und damit ein besseres Betriebsverhalten der Filter zur Folge. Wenn gemäss einer Weiterbildung das Verstärkungsmaterial nicht nur oberflächlich wirksam ist, sondern das Filtermedium bis zu einer geeigneten Tiefe oder gänzlich durchsetzt, kann ein hoher beidseitiger Verschleisschutz erreicht werden, so dass es nicht erforderlich ist, das Verstärkungsmaterial abwechselnd auf die eine oder andere Seite des Filtermediums aufzubringen, um dadurch der Eingriffnahme der Abstandshalter mit wechselseitigen Oberflächen des Filtermediums Rechnung zu tragen. Ausserdem kann dadurch die Verschleissfestigkeit der kritischen Anströmflächen des Filtermediums gleichzeitig wesentlich erhöht werden.

Ein weiterer Vorteil aus der Verwendung eines erfindungsgemässen Filtermediums ist, dass der Einsatz einfacher kostengünstiger Abstandshalter möglich ist, die, wenn erwünscht, selbst ohne Umbördelung ihrer endseitigen Kanten verwendet werden können. Gegenüber Filteranordnungen mit zwischen den Abstandshaltern und dem Filtermedium angeordneten Schutzeinrichtungen wird ferner eine nicht unwesentliche Gewichtseinsparung erzielt.

Das bevorzugte Verfahren zum Herstellen eines Filtermediums der vorerwähnten Art zeichnet sich dadurch aus,dass ein Verstärkungsmaterial im fliessfähigen Zustand auf wenigstens eine der Oberflächen einer Bahn aus dem Filtermedium an longitudinal entsprechend den vorzusehenden Faltungen beabstandeten Querbereichen mit einer an die Breitenabmessung der Abstandshalter angepassten Breite aufgebracht und anschliessend auf einen dauerelastischen Zustand verfestigt wird.

Das Aufbringen des Verstärkungsmaterials auf die Bahn kann durch Aufsprühen, Aufwalzen, Aufdrucken, mit einem Schwamm oder in irgendeiner anderen geeigneten Weise erfolgen, wobei solche Techniken bevorzugt werden, die eine Automatisierung des Auftragvorganges ermöglichen. Vorzugsweise wird das Verstärkungsmaterial vor Verfestigung in das Filtermedium bis zu einer geeigneten Tiefe eindringen gelassen, d.h. es findet eine Imprägnierung des Filtermediums mit dem Verstärkungsmaterial statt.

Eine Filteranordnung für ein Schwebstoffilter, bestehend aus einem zick-zackförmig gefalteten Filtermedium mit zwischen den Faltungslagen angeordneten, einerends am Filtermedium abgestützten Abstandshaltern ist gekennzeichnet durch ein wenigstens längs des Abstützungsbereiches der Abstandshalter verstärktes Filtermedium der vorerwähnten Art.

Die Erfindung wird nachfolgend anhand einer Ausführungsform und der Zeichnung näher erläutert. Es zeigen:
Fig. 1 in schematischer Seitenansicht eine Filteranordnung mit einem erfindungsgemäss aufgebauten Filtermedium,
Fig. 2 in Draufsicht eine Bahn aus einem Filtermedium nach der Erfindung.

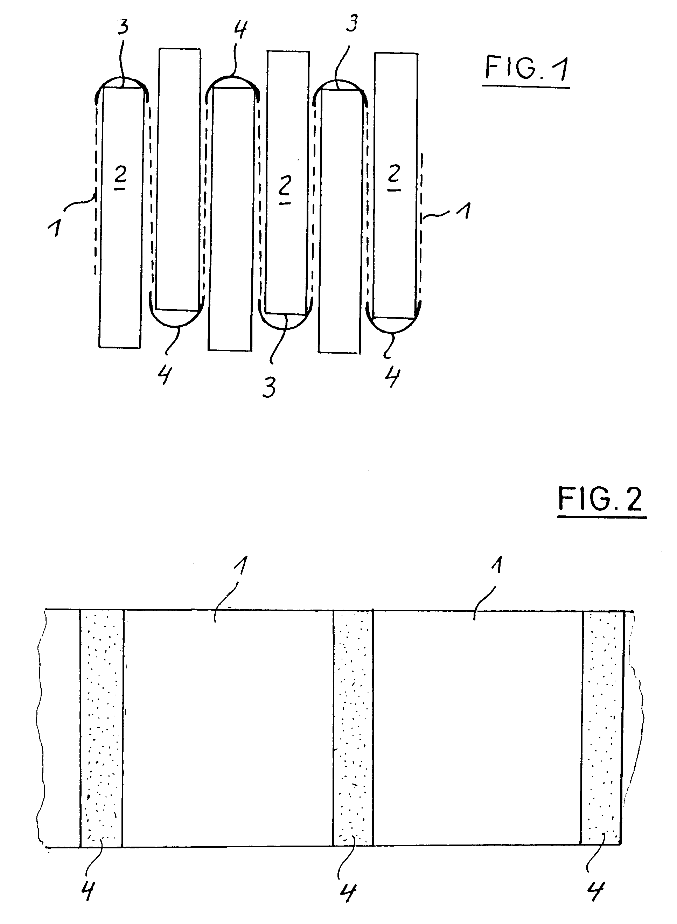

Nach Fig. 1 umfasst eine erfindungsgemäss aufgebaute Filteranordnung ein das allgemeine Bezugszeichen 1 tragendes Filtermedium, das in die dargestellte zickzackförmige Konfiguration gefaltet ist, und Abstandshalter 2, die von wechselseitigen Stellen in die durch die Faltungen gebildeten Taschen des Filtermediums 1 eingesetzt sind und die Faltungslagen in einem geeigneten Abstand voneinander halten. Beim Filtermedium kann es sich um irgendein geeignetes zu einer flächigen Konfiguration verarbeitetes fasriges oder nicht fasriges Material mit einer Porosität handeln, die zwar einen möglichst ungehinderten Durchtritt für Gase, insbesondere Luft, ermöglicht, jedoch darin enthaltene Schwebstoffe, wie Staub und andere teilchenförmige Materie, wirksam zurückzuhalten vermag. Es versteht sich jedoch, dass die Erfindung nicht auf Schwebstoffilter der genannten Art beschränkt ist, sondern generell bei Filteranordnungen vorteilhaft eingesetzt werden kann, bei denen ein vorzeitiger Verschleiss des Filtermediums infolge der verwendeten Abstandshalter zu befürchten ist.

Bei den Abstandshaltern kann es sich um in eine zickzackförmige Konfiguration gefaltete Bleche aus verschiedenen Materialien insbesondere um dünnes Aluminiumblech handeln. Die zickzackförmig verlaufenden Endkanten 3 der Abstandshalter können ohne weitere Bearbeitung bleiben oder gemäss dem Vorschlag nach der DE-A-16 07 697 umgebördelt sein. Bezüglich weiterer Details der Abstandshalter kann auf diese Druckschrift Bezug genommen werden, die damit ausdrücklich in die vorliegende Beschreibung der Erfindung einbezogen ist.

Wie dargestellt, ist das Filtermedium 1 längs der Umbiegungen bzw. Faltungen mit einem in Fig. 1 durch ausgezogene Linien angedeuteten Verstärkungsmaterial versehen, das wenigstens einen solchen Flächenbereich 4 des Filtermediums einnimmt, dass sichergestellt ist, dass die in die Taschen zwischen benachbarten Faltungslagen eingeschobenen Abstandshalter 2 mit ihren Endkanten 3 nur in Eingriff mit den verstärkten, nicht jedoch unverstärkten Bereichen des Filtermediums treten können.

Darauf hinzuweisen ist ferner, dass das Filtermedium keine Falt- oder Kickrillen ausweist, mithin die verstärkten Bereiche ohne Querschnittsschächungen in die unverstärken übergehen.

Wie dargestellt, haben deshalb die Faltungen infolge der versteifenden Wirkung des Verstärkungsmaterials eine saubere runde Konfiguration, was ein verbessertes aerodynamisches Anströmverhalten der Filter schafft. Hierdurch wird Wirbelbildung weitestgehend vermieden und ein geringerer Druckabfall im Vergleich zu Filteranordnungen mit eckig ausgebildeten Umbiegungen erzielt.

Fig. 2 zeigt in Draufsicht ein Filtermedium zur Verwendung bei einer Filteranordnung nach Fig. 1. Das Filtermedium 1 liegt im allgemeinen in Bahnform vor. Wie dargestellt, sind in Abständen entsprechend dem Abstand zwischen den vorzusehenden Faltungen oder Umbiegungen streifenförmige Querbereiche 4 definiert, an denen das Filtermedium 1 mit dem Verstärkungsmaterial versehen bzw. imprägniert ist. Die Querbereiche 4 haben eine auf die Breitenabmessung der Abstandshalter 2 abgestimmte Breite. Das Verstärkungsmaterial kann entweder nur auf einer Seite des Filtermediums oder abwechselnd auf der einen und anderen Seite aufgegeben sein, um der abwechselnden Eingriffnahme der Abstandshalter 2 mit der einen oder anderen Seite des Filtermediums gemäss Fig. 1 Rechnung zu tragen. Wenn das Verstärkungsmaterial nicht nur an der Oberfläche wirksam ist, sondern das Filtermedium 1 bis zu einer geeigneten Tiefe oder ggf. gänzlich durchsetzt, kann auf einen wechselseitigen Auftrag des Verstärkungsmaterials verzichtet werden.

Geeignete Verstärkungsmaterialien sind insbesondere dauerelastische Kunststoffe, wie Elastomere, insbesondere auf Si-Basis, oder Polyurethan-Kunststoffe, da sich diese durch Aufsprühen, Aufdrucken, Aufwalzen oder dgl. leicht auf das Filtermedium aufbringen und in einem Wärmeprozess zu einer dauerelastischen Konfiguration verfestigen lassen. Es können jedoch, wenn erwünscht, auch andere Kunststoffe oder Kunstharze verwendet werden. Die Verstärkungsmaterialien sollten vor Verarbeitung im fliessfähigen Zustand vorliegen, so dass sie die Eigenschaft besitzen, in das Filtermedium eindringen zu können.

Die Verfestigung des aufgebrachten Verstärkungsmaterials kann kann erfolgen, indem die Bahn nach Auftrag des Materials durch einen Wärmeofen geführt wird, wenn es sich um Verstärkungsmaterialien handelt, die unter Wärme in einen dauerelastischen festen Zustand überführt werden können. Sowohl das Aufgeben und Verfestigen des Verstärkungsmaterials als auch das Falten des Filtermediums 1 in die in Fig. 1 gezeigte zickzackförmige Konfiguration können in dem Fachmann bekannter Weise automatisch erfolgen.

## Patentansprüche

1. Faltbares Schwebstoffiltermedium mit zwischen den Faltungslagen angeordneten Abstandshaltern,
gekennzeichnet durch longitudinal entsprechend der vorzusehenden Faltungen beabstandete Querbereiche (4) mit einer auf die Breite der Abstandshalter (2) angepaßten Breitenabmessung, welche mit einem dauerelastischen Verstärkungsmaterial auf wenigstens einer Oberfläche versehen sind, wobei die verstärkten Bereiche (4) im wesentlichen frei von Querschnittsschwächungen, insbesondere Falt- oder Knickrillen, in die unverstärkten Bereiche übergehen.

2. Filtermedium nach Anspruch 1,
dadurch gekennzeichnet,
daß das Verstärkungsmaterial ein elastisches Kunststoffmaterial umfaßt.

3. Filtermedium nach Anspruch 1 und 2,
dadurch gekennzeichnet,
daß das Kunststoffmaterial ein elastomeres Material ist.

4. Filtermedium nach einem der vorhergehenden Ansprüche,
dadurch gekennzeichnet,
daß dieses an den Querbereichen (4) mit dem Verstärkungsmaterial imprägniert ist.

5. Verfahren zum Herstellen eines faltbaren Schwebstofffiltermediums mit zwischen den Faltungslagen angeordneten Abstandshaltern,
dadurch gekennzeichnet,
daß ein Verstärkungsmaterial im fließfähigen Zustand auf wenigstens eine der Oberfläche einer Bahn aus dem Filtermedium an longitudinal entsprechend den vorzusehenden Faltungen beabstandeten Querbereichen mit einer an die Breitenabmessung der Abstandshalter angepaßten Breite aufgebracht und anschließend auf einen dauerelastischen Zustand verfestigt wird.

6. Verfahren nach Anspruch 5,
dadurch gekennzeichnet,
daß das Verstärkungsmaterial auf die Bahn aufgesprüht, aufgewalzt oder aufgedruckt wird.

7. Verfahren nach Anspruch 5 oder 6,
dadurch gekennzeichnet,
daß das Verstärkungsmaterial vor Verfestigung in das Filtermedium eindringen gelassen wird.

8. Filteranordnung für einen Schwebstoffilter, bestehend aus einem zick-zack-förmig gefaltenen Filtermedium mit zwischen den Faltungslagen angeordneten, einerends am Filtermedium abgestützten Abstandshaltern,
gekennzeichnet durch ein wenigstens längs des Abstützungsbereiches (4) der Abstandshalter (2) mittels eines dauerelastischen Verstärkungsmaterials verstärktes Filtermedium (1), das an den Faltungen oder Umbiegungsstellen ausgerundet ist.

9. Filteranordnung nach Anspruch 8,
dadurch gekennzeichnet,
daß die Abstandshalter eine zick-zack-förmige Konfiguration aufweisen.

## Claims

1. A foldable filter medium for airborne particles, with spacers arranged between the fold layers,
characterised
by transverse regions (4) which are spaced longitudinally in accordance with the folds to be provided, whose width is adapted to the width of the spacers (2) and which are provided with a permanently resilient reinforcing material on at least one surface, with the reinforced regions (4) changing into the non-reinforced regions so as to be substantially free from cross-sectional weaknesses, especially grooves caused by folding or bending.

2. A filter medium according to claim 1,
characterised in
that the reinforcing material comprises a resilient plastic material.

3. A filter medium according to claims 1 and 2,
characterised in
that the plastic material is an elastomer material.

4. A filter medium according to any one of the preceding claims,
characterised in
that, in the transverse regions (4), it is impregnated with the reinforcing material.

5. A process of manufacturing a foldable filter medium for airborne particles,with spacers arranged between the fold layers,
characterised in
that a reinforcing material in the flowable condition is applied to at least one of the surfaces of a width of filter medium in transverse regions spaced longitudinally in accordance with the folds to be provided and comprising a width adapted to the width of the spacers, which reinforcing material is subsequently made to set in such a way that it assumes a permanently resilient condition.

6. A process according to claim 5,
characterised in
that the reinforcing material is sprayed, rolled or printed on to a width of filter medium.

7. A process according to claims 5 or 6,
characterised in
that the reinforcing material is allowed to penetrate the filter medium prior to setting.

8. A filter assembly for a filter for airborne particles, consisting of a zig-zag-shaped folded filter medium with spacers arranged between the fold layers and supported at one end of the filter medium,
characterised
by a filter medium (1) which is reinforced at least along the supporting region (4) of the spacers (2) by a permanently resilient reinforcing material and which is rounded at the folds or in the bent regions.

9. A filter assembly according to claim 8,
characterised in
that the spacers comprise a zig-zag-shaped configuration.

## Revendications

1. Matériau filtrant pouvant être plissé et destiné à des substances en suspension, qui comporte des entretoises d'espacement disposées entre les couches des plis, caractérisé par des zones transversales (4) espacées longitudinalement conformément aux plis à prévoir, présentant une dimension en largeur adaptée à la largeur des entretoises d'espacement (2), et pourvues sur au moins une face d'un matériau de renfort à élasticité permanente, les zones renforcées (4) se raccordant aux zones non renforcées en étant sensiblement libres d'affaiblissements de section transversale, notamment de stries de pliage ou de froissement.

2. Matériau filtrant selon la revendication 1, caractérisé en ce que le matériau de renfort comprend une matière plastique élastique.

3. Matériau filtrant selon les revendications 1 et 2, caractérisé en ce que la matière plastique est un matériau élastomère.

4. Matériau filtrant selon l'une des revendications précédentes, caractérisé en ce qu'il est imprégné par le matériau de renfort dans les zones transversales (4).

5. Procédé de fabrication d'un matériau filtrant pouvant être plissé et destiné à des substances en suspension, qui comporte des entretoises d'espacement entre les couches des plis, caractérisé en ce qu'un matériau de renfort se trouvant dans un état dans lequel il est susceptible de s'écouler, est appliqué sur au moins une face d'une nappe du matériau filtrant dans des zones transversales espacées longitudinalement conformément aux plis à prévoir et présentant une dimension en largeur adaptée à la largeur des entretoises d'espacement, et est ensuite durci jusqu'à un état d'élasticité permanente.

6. Procédé selon la revendication 5, caractérisé en ce que le matériau de renfort est appliqué sur la nappe par pulvérisation, au rouleau, ou par impression.

7. Procédé selon la revendication 5 ou 6, caractérisé en ce qu'on laisse pénétrer le matériau de renfort dans le matériau filtrant, avant son durcissement.

8. Ensemble de filtration pour un filtre à substances en suspension, composé d'un matériau filtrant plissé selon une forme en zigzag et comportant des entretoises d'espacement disposées entre les couches des plis, et s'appuyant à l'une de leurs extrémités sur le matériau filtrant, caractérisé par un matériau filtrant (1) renforcé au moyen d'un matériau de renfort à élasticité permanente, au moins le long de la zone d'appui (4) des entretoises d'espacement (2), le matériau filtrant (1) étant arrondi au niveau des plis ou zones de cintrage.

9. Ensemble de filtration selon la revendication 8, caractérisé en ce que les entretoises d'espacement se présentent selon une configuration en forme de zigzag.
